Europäisches Patentamt

(19) European Patent Office

Office européen des brevets

(11) Veröffentlichungsnummer: **0 096 860
B1**

(12) **EUROPÄISCHE PATENTSCHRIFT**

(45) Veröffentlichungstag der Patentschrift:
18.01.89

(51) Int. Cl.⁴: **H 01 M 2/14**

(21) Anmeldenummer: **83105685.8**

(22) Anmeldetag: **10.06.83**

(54) Scheider für Blei-Bleidioxid-Akkumulatoren und Verfahren zu deren Herstellung.

(30) Priorität: **14.06.82 DE 3222361**

(43) Veröffentlichungstag der Anmeldung:
**28.12.83 Patentblatt 83/52**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(56) Entgegenhaltungen:
**DD-A- 150 228
DE-A- 2 759 464
DE-B- 2 415 076
DE-B- 3 102 735
FR-A- 2 209 608
FR-A- 2 423 871
FR-A- 2 445 030
FR-A- 2 489 744**

**CHEMICAL ABSTRACTS, Band 90, Nr. 10, März 1979,
Seite 416, Nr. 78441x, Columbus, Ohio, US
Encycl. of Chemical Technol. (Kirk Othmer), page 105,
vol. 15**

(73) Patentinhaber: **Grace GmbH, Erlengang 31,
D-2000 Norderstedt (DE)**

(72) Erfinder: **Böhnstedt, Werner, Dr., Wacholderweg 43,
D-2359 Henstedt-Ulzburg 3 (DE)**
Erfinder: **Krey, Hans Joachim, Eschenweg 6,
D-2359 Henstedt-Ulzburg (DE)**

(74) Vertreter: **UEXKÜLL & STOLBERG Patentanwälte,
Beselerstrasse 4, D-2000 Hamburg 52 (DE)**

## Beschreibung

Die Erfindung betrifft einen Scheider für Blei-Bleidioxid-Akkumulatoren für zyklische Beanspruchungen und ein Verfahren zu deren Herstellung.

Der Einsatz von Scheidern in elektrochemischen Zellen wird durch zwei Grundforderungen bestimmt; zum einen müssen positive und negative Elektroden physisch voneinander getrennt werden, um einen elektronischen Kontakt zu verhindern, und zum anderen muss der Scheider den ionischen Stromfluss im Elektrolyten möglichst ungehindert zulassen. Diese Forderungen werden je nach Zellenaufbau und Elektrodenform mehr oder minder zufriedenstellend von einem breiten Spektrum von Scheidern erfüllt, welches sich von einfachen Abstandshaltern bis zu mikroporösen Raumstrukturen erstreckt.

Aus Chemical Abstracts, Band 90, 1979, S. 416, Nr. 78441x sind als Batteriescheider geeignete Membranen bekannt, die aus einem geschäumten olefinischen Polymer bestehen und Zellen mit Öffnungen von 10 bis 20 μm aufweisen, wobei alle oder ein Teil der Zellwände feine Löcher mit einer Grösse von 0,001 bis 5 μm besitzen und zumindest diejenigen Membranbereiche, die mit dem Elektrolyten in Berührung kommen, mit einer feuchten Schicht beschichtet sind. Diese als Batteriescheider vorgeschlagenen Membranen fallen aufgrund ihrer grossen Öffnungen in den Schaumzellen nicht in den hier interessierenden Bereich der durchwachsungssicheren Batteriescheider mit maximalen Porendurchmessern von 3–5 μm (s. unten). Bei zyklischer Beanspruchung von Blei-Bleidioxid-Akkumulatoren neigen die negativen Bleielektroden zur Dendritenbildung, d.h., metallische Auswüchse drohen einen elektronischen Kurzschluss zwischen den Elektroden unterschiedlicher Polarität herzustellen. Seitens des Scheiders können diese Durchwachsungen durch die Verwendung von mikroporösen Strukturen verhindert werden, wobei es sich in der Akkumulatorentechnik eingebürgert hat, den Begriff «mikroporös» mit «durchwachsungssicher gegen Bleidendriten» gleichzusetzen. Die Erfahrung hat gezeigt, dass nur Scheider mit maximalen Porendurchmessern von 3 bis 5 μm oder weniger als durchwachsungssicher anzusehen sind. Für zyklische Einsatzbedingungen sind somit zur Erzielung befriedigender Lebensdauern nicht-mikroporöse Systeme wie Faser- oder Gewebestrukturen ungeeignet.

Es ist mehrfach vorgeschlagen worden, makroporöse Systeme im obigen Sinne durch Füllen der Poren mit Substanzen mikroporöser Struktur, z.B. unter anderem Siliciumdioxid, zu verbessern. Dies führte im allgemeinen zu sehr hohen elektrischen Widerständen und hoher Säureverdrängung und konnte sich daher nicht durchsetzen. Überdies werden durch zu enge Poren die Säureausgleichsvorgänge so stark behindert, dass unter anderem ein vorzeitiger Spannungsabfall am Entladungsende droht.

Aus elektrochemischen Gründen ist für die Gitter der positiven Elektroden bei zyklischer Betriebsweise ein relativ hoher Antimongehalt der Bleilegierung (derzeit ca. 6 bis 8%) notwendig. Dieses Antimon kommt im Verlauf der Zyklenlebensdauer aus den Gittern der positiven Elektroden, wandert durch den Scheider und kann sich, da es edler als Blei ist, auf der negativen Elektrode abscheiden. Dieser Vorgang wird allgemein als Antimonvergiftung bezeichnet.

Die damit in Zusammenhang stehenden Vorgänge können nachweislich durch Scheider beeinflusst werden; allerdings ist der Mechanismus ihrer Einflussnahme unbekannt. Chemische Fällungsreaktionen im Scheider, Komplexierungen und Antimonionen mit organischen Bestandteilen oder Zersetzungsprodukten des Scheidermaterials oder Absorptionsreaktionen mit der Scheiderstruktur werden ebenso diskutiert wie Diffusionshemmungen infolge von Reibungseffekten in sehr engen Poren.

Die heute in Traktionsbatterien eingesetzten Scheider bestehen aus einer mikroporösen Kunststoff- oder Hartgummistruktur, der zur Erzielung oder Erhöhung der Porosität und zur verbesserten Benetzbarkeit Füllstoffe, beispielsweise Siliciumdioxid, zugesetzt werden. Der Füllstoffzusatz beträgt im allgemeinen zwischen 10 und 50%; noch höhere Anteile würden den Scheider brüchig und damit für den Herstellungsprozess des Akkumulators ungeeignet werden lassen.

Durch den Produktionsprozess bedingt bildet die Kunststoff- oder Hartgummistruktur relativ grosse Hohlräume, die jedoch etwas kleiner als die oben erwähnten 3 bis 5 μm sind, so dass die Transportvorgänge im Elektrolyten nicht übermässig gehemmt werden. Unbefriedigend ist, dass diejenigen Scheider, die einen wirksamen Einfluss auf die Antimontransportvorgänge nehmen, hohe elektrische Widerstände aufweisen, während die niedrige elektrische Widerstände aufweisenden Scheider nur einen geringen Einfluss auf die Antimonvergiftung nehmen.

Der Erfindung liegt daher die Aufgabe zugrunde, die Scheider für Blei-Bleidioxid-Akkumulatoren für zyklische Einsatzbedingungen (Traktionsbatterien) so zu verbessern, dass sie die den bekannten Scheidern anhaftenden Nachteile vermeiden, indem sie niedrigen elektrischen Widerstand und geringe Säureverdrängung mit einer möglichst nachhaltigen Verzögerung der Antimonvergiftung und damit erheblicher Verlängerung der Zyklenlebensdauer des Akkumulators verknüpfen.

Diese Aufgabe wird erfindungsgemäss durch Scheider der in den Patentansprüchen gekennzeichneten Art gelöst.

Es wurde gefunden, dass die Antimonvergiftung bei Blei-Bleidioxid-Akkumulatoren für zyklische Beanspruchungen erheblich verzögert wird, wenn man herkömmliche mikroporöse Scheider einer zusätzlichen Behandlung unterwirft, bei der man auf der inneren Oberfläche der im wesentlichen unveränderten mikroporösen Scheiderstruktur (vorherrschende Porenradien: zwischen 0,02 und 3 μm) möglichst vollständig eine «hypermikroröse» Feinstruktur mit Porenradien von weniger

als 0,02 µm erzeugt. Diese Aufrauhung der inneren Oberflächen der Scheider kann entweder durch Anätzen oder Herauslösen löslicher Bestandteile der Struktur oder durch Oberflächenbeschichtung mit einer hypermikroporöse Strukturen ausbildenden Substanz erfolgen.

Zur Herstellung der erfindungsgemässen Scheider werden herkömmliche mikroporöse Scheider, die üblicherweise auf Phenolformaldehydharz, PVC, Polyethylen oder Hartgummi basieren und im allgemeinen zwischen 10 und 50% Füllstoff enthalten, mit einer Wasserglaslösung durchtränkt, die eine Dichte von etwa 1,05 bis 1,4 g/cm³ besitzt. Nach der Imprägnierung wird das Siliciumdioxid ausgefällt, vorzugsweise mit Schwefelsäure. Anschliessend werden die Scheider mit Wasser säurefrei gewaschen und getrocknet. Zur Intensivierung des Effektes wird diese Behandlung, d.h. Imprägnierung, Fällung, Wäsche mit Wasser und Trocknung, einmal oder mehrmals wiederholt. Dabei kann gegebenenfalls bei der oder den anfänglichen Behandlungen auf die Fällung verzichtet werden, so dass die Fällungsstufe nur bei der oder den letzten Behandlungen durchgeführt wird.

Alternativ können die herkömmlichen mikroporösen Scheider mit einer 3–30 gew.%igen Bariumsalzlösung imprägniert werden und dann in der zuvor angegebenen Weise weiterbehandelt werden. Auch diese Behandlung kann einmal oder mehrmals wiederholt werden.

In einer anderen Ausführungsform der Erfindung werden herkömmliche mikroporöse Scheider mit Säuren oder Laugen, z.B. HNO₃ und NaOH, angeätzt. Bei Verwendung von Flusssäure zum Anätzen erfolgt auch ein Herauslösen des in den meisten herkömmlichen mikroporösen Scheidern vorhandenen Kieselsäurefüllstoffes.

In einer weiteren Ausführungsform der Erfindung wird bei der Herstellung der herkömmlichen mikroporösen Scheider eine Substanz zugesetzt, die später mit Hilfe eines Lösungsmittels herausgelöst werden kann. So können bei der Herstellung des mikroporösen Scheiders beispielsweise Zucker, Stärke, Salze (z.B. Natriumsulfat) und andere lösliche Substanzen zugegeben werden. Diese Substanzen werden dann mit einem Lösungsmittel herausgelöst. In besonders einfacher Weise lässt sich dieses Herauslösen bei solchen Substanzen durchführen, die wasserlöslich sind, da mikroporöse Scheider häufig bereits beim herkömmlichen Produktionsprozess gewaschen werden, so dass die Erzeugung der hypermikroporösen Feinstruktur keine zusätzlichen Verfahrensschritte erfordert. Selbstverständlich können aber auch je nach zugesetzter Substanz andere Lösungsmittel verwendet werden.

Durch die beschriebenen Verfahrensweisen wird auf der inneren Oberfläche der mikroporösen Struktur des Scheiders eine hypermikroporöse Feinstruktur ausgebildet. Dies zeigt sich daran, dass die nach der BET-Methode bestimmte innere Oberfläche gegenüber dem mikroporösen Ausgangsscheider deutlich vergrössert ist. Dies gilt auch für die Beschichtung mit Siliciumdioxid oder Bariumsulfat, obwohl dadurch die Porosität in gewissem Umfang verringert wird. So wurde gefunden, dass sich die innere Oberfläche nach Erzeugung der hypermikroporösen Feinstruktur um mehr als das Doppelte und in den meisten Fällen um etwa das 4- bis 5-fache vergrössert hatte. Im Falle der Beschichtung mit Siliciumdioxid oder Bariumsulfat betrug dabei die mittlere Beschichtungsdicke etwa 0,1 bis 0,15 µm.

Beispiel 1

Auf modifiziertem Phenolformaldehydharz basierende Scheider mit einem durchschnittlichen Porenradius von 0,3 µm wurden mit einer klaren Wasserglaslösung ( d = 1,18 g/cm³ ) in der Weise durchtränkt, dass das Wasserglas immer nur von einer Seite her durch die Scheider drang. Nach der Imprägnierung wurden die Scheider 15 Minuten in Schwefelsäure mit einer Dichte von 1,28 g/cm³ gelagert, um Siliciumdioxid auszufällen. Anschliessend wurden die Scheider mit 60°C heissem Wasser säurefrei gewaschen und bei 110°C in einem Umlufttrockenschrank getrocknet.

Die so erhaltenen Scheider wurden nochmals in der gleichen Weise behandelt, so dass insgesamt eine Beschichtung in einer Stärke von etwa 0,1 bis 0,15 µm erhalten wurde. Die nach der BET-Methode bestimmte innere Oberfläche hatte sich von 20 m²/g auf 90 m²/g erhöht. Der durchschnittliche Porenradius der hypermikroporösen Feinstruktur betrug etwa 0,01 µm.

In gleicher Weise wurden Hartgummi-, PVC- und Polyethylenscheider behandelt. Es wurden im wesentlichen die gleichen Eigenschaften, wie zuvor angegeben, ermittelt.

Die auf diese Weise mit einer hypermikroporösen Feinstruktur versehenen mikroporösen Scheider wurden einer Lebensdauerprüfung nach DIN 43539 Teil 3 unterworfen und ergaben im Vergleich zu den jeweiligen Ausgangsscheidern eine beträchtlich erhöhte Zyklenlebensdauer.

Beispiel 2

Beispiel 1 wurde mit dem Unterschied wiederholt, dass die Scheider anstelle einer Wasserglaslösung mit einer 20 gew.%igen Bariumchloridlösung behandelt wurden. Die übrigen Verfahrensbedingungen waren die gleichen, wie in Beispiel 1 angegeben. Auch die so hergestellten Scheider ergaben bei der Lebensdauerprüfung nach DIN 43539 Teil 3 eine erheblich erhöhte Zyklenzahl.

**Patentansprüche**

1. Scheider für Blei-Bleidioxid-Akkumulatoren für zyklische Beanspruchungen auf Basis herkömmlicher mikroporöser Scheider, dadurch gekennzeichnet, dass durch Aufrauhung auf der inneren Oberfläche der mikroporösen Scheiderstruktur eine hypermikroporöse Feinstruktur vorhanden ist.

2. Scheider nach Anspruch 1, dadurch gekennzeichnet, dass die hypermikroporöse Feinstruktur durchschnittliche Porenradien von weniger als 0,01 µm aufweist.

3. Verfahren zur Herstellung von Scheidern gemäss den Ansprüchen 1 und 2, dadurch gekennzeichnet, dass man die innere Oberfläche der mikroporösen Scheiderstruktur aufrauht, indem man einen mikroporösen Scheider mit einer eine hypermikroporöse Feinstruktur ausbildenden Substanz imprägniert, den mikroporösen Scheider unter Ausbildung einer hypermikroporösen Struktur anätzt oder unter Ausbildung einer hypermikroporösen Struktur aus dem Scheider eine zuvor bei der Herstellung des Scheiders zugesetzte Substanz herauslöst.

4. Verfahren nach Anspruch 3, dadurch gekennzeichnet, dass man den mikroporösen Scheider mit einer Wasserglas- und/oder Bariumsalzlösung imprägniert und den so imprägnierten Scheider mit Säure, insbesondere Schwefelsäure behandelt, mit Wasser wäscht und trocknet.

5. Verfahren nach Anspruch 4, dadurch gekennzeichnet, dass man die Behandlung des mikroporösen Scheiders gemäss Anspruch 4 einmal oder mehrmals wiederholt.

## Claims

1. Separator for lead/lead dioxide accumulators for cyclic stress conditions based on conventional microporous separators, characterized in that a hypermicroporous fine structure is present as a result of roughening on the internal surface of the microporous separator structure.

2. Separator according to Claim 1, characterized in that the hypermicroporous fine structure has mean pore radii of less than 0.02 μm.

3. Process for producing separators according to Claims 1 and 2, characterized in that the internal surface of the microporous separator structure is roughened by impregnating a microporous separator with a substance which forms a hypermicroporous fine structure, the microporous separator is slightly etched to form a hypermicroporous structure, or a substance added previously during the production of the separator dissolved out of the separator to form a hypermicroporous structure.

4. Process according to Claim 3, characterized in that the microporous separator is impregnated with a waterglass and/or barium-salt solution and the separator thus impregnated is treated with acid, in particular sulphuric acid, washed with water and dried.

5. Process according to Claim 4, characterized in that the treatment of the microporous separator according to Claim 4 is repeated once or several times.

## Revendications

1. Séparateur pour accumulateurs au plomb-dioxyde de plomb pour sollicitations cycliques à base d'un séparateur microporeux habituel, caractérisé par la présence d'une structure fine hypermicroporeuse par formation d'une rugosité sur la surface interne de la structure microporeuse du séparateur.

2. Séparateur selon la revendication 1, caractérisé en ce que la structure fine hypermicroporeuse présente des rayons de pore moyens inférieurs à 0,02 μm.

3. Procédé pour la fabrication de séparateurs selon les revendications 1 et 2, caractérisé en ce que l'on rend rugueuse la surface interne de la structure microporeuse des séparateurs en imprégnant un séparateur microporeux avec une substance formant une structure fine hypermicroporeuse, en attaquant le séparateur microporeux avec formation d'une structure hypermicroporeuse ou en éliminant du séparateur une substance ajoutée au préalable lors de la fabrication du séparateur avec formation d'une structure hypermicroporeuse.

4. Procédé selon la revendication 3, caractérisé en ce que l'on imprègne le séparateur microporeux avec une solution de verre soluble et/ou de sel de baryum, en ce que l'on traite le séparateur ainsi imprégné avec de l'acide, en particulier de l'acide sulfurique, en ce qu'on le lave à l'eau et en ce qu'on le sèche.

5. Procédé selon la revendication 4, caractérisé en ce qu'on répète une ou plusieurs fois le traitement du séparateur microporeux selon la revendication 4.